# EUROPEAN PATENT APPLICATION

(11) **EP 4 693 668 A1**
(43) Date of publication of application: **11.02.2026**
(21) Application number: 24784612.4
(22) Date of filing: 19.02.2024
(51) Int. Cl.: H01M 50/291, H01M 50/213, H01M 50/242, H01M 50/244, H01M 50/247, H01M 50/271, H01M 50/289, H04R 1/02

(54) **MICROPHONE AND BATTERY STORAGE STRUCTURE**

(30) Priority: 05.04.2023 JP 2023061380
(71) Applicant: Audio-Technica Corporation, Machida-shi, Tokyo 194-8666 (JP)
(72) Inventor: IMAMURA Takahiro, Machida-shi, Tokyo 194-8666 (JP)
(74) Representative: Mathys & Squire
(86) International application number: PCT/JP2024/005813
(87) International publication number: WO 2024/209810

(57) **Abstract**

A handheld microphone 1 includes: a base unit 3 having a sound collection unit 2 attached to one end side, and includes a battery housing chamber 30; a grip 4 that is attached to the base unit 3, and covers the battery housing chamber 30 in an openable and closable manner; and a battery cover 5 that has a first surface to come into contact with the battery 10 housed in the battery housing chamber 30. The battery cover 5 has a protruding portion 52 provided on a second surface opposite to the first surface, and, in a state where the battery housing chamber 30 is closed by the grip 4, the protruding portion 52 is in contact with an inner peripheral surface of the grip 4.

## Description

### Technical Field

The present invention relates to a microphone and a battery housing structure.

### Background Art

Batteries such as cylindrical dry cells or rechargeable batteries are often used as power sources for driving handheld microphones, and batteries are housed in housing chambers provided in handheld microphones (see Patent Literatures 1 and 2, for example).

**In** this regard, when a handheld microphone receives an impact from the outside, a battery might move out of the regular housing position, and power supply might be interrupted.

Meanwhile, since a handheld microphone is used while being gripped with a hand, it is not preferable to make its outer diameter larger than necessary. Therefore, the inside of a handheld microphone has a small space, and it is not preferable to adopt a complicated structure or many components for securing the battery therein, because such adoption will lead to an increase in size. Also, it is difficult to give sufficient strength to a component for securing the battery, and there is a possibility that the component will be damaged when the battery is frequently replaced or the handheld microphone is unexpectedly dropped.

### Citation List

### Patent Literature

Patent Literature 1: JP 2016-96445 A
Patent Literature 2: JP 2016-139568 A

### Summary of Invention

### Technical Problem

An objective of the present invention is to provide a microphone that can reliably hold a housed battery therein and excels in operability at a time of battery replacement.

### Solution to Problem

A microphone according to the present invention includes: a base unit that has a sound collection unit attached to one end side, and includes a battery housing chamber; a cylindrical unit that is attached to the base unit, and covers the battery housing chamber in an openable and closable manner; and a contact piece that has a first surface to come into contact with a battery housed in the battery housing chamber. **In** the microphone, the contact piece has a first protruding portion provided on a second surface opposite to the first surface, and, in a state where the battery housing chamber is closed by the cylindrical unit, the contact piece is in contact with an inner peripheral surface of the cylindrical unit.

### Advantageous Effects of Invention

A microphone according to the present invention can reliably hold a housed battery therein, and excels in operability at a time of battery replacement.

### Brief Description of Drawings

Fig. 1 is an exploded perspective view partially showing a handheld microphone according to a first embodiment of the present invention in a longitudinal cross-section.
Fig. 2 is a partial cross-sectional side view of the handheld microphone, illustrating a state in which a grip closes a battery housing chamber.
Fig. 3 is a partially enlarged perspective view of the battery housing chamber of the handheld microphone.
Fig. 4 is a cross-sectional view taken along the line A-A, in which some of the internal mechanisms of the handheld microphone are not shown.
Fig. 5 is a cross-sectional view taken along the line B-B, in which some of the internal mechanisms of the handheld microphone are not shown.
Fig. 6 is an external perspective view of a planar side of a battery cover included in the handheld microphone.
Fig. 7 is an external perspective view of the bottom side of the battery cover included in the handheld microphone.
Fig. 8 is an external perspective view showing the battery housing chamber of the handheld microphone, and illustrates a state in which the battery cover is in contact with the batteries housed in the battery housing chamber.
Fig. 9 is an external perspective view showing the battery housing chamber of the handheld microphone, and illustrates a state in which a battery is being taken out from the battery housing chamber.
Fig. 10 is an exploded side view of a handheld microphone according to a second embodiment of the present invention in a partial cross-section.

### Description of Embodiments

**In** the description below, handheld microphones and battery housing structures according to embodiments of the present invention will be explained with reference to the drawings.

Note that a handheld microphone is a microphone that can be held and used by a user, and is an example of a microphone according to the present invention.

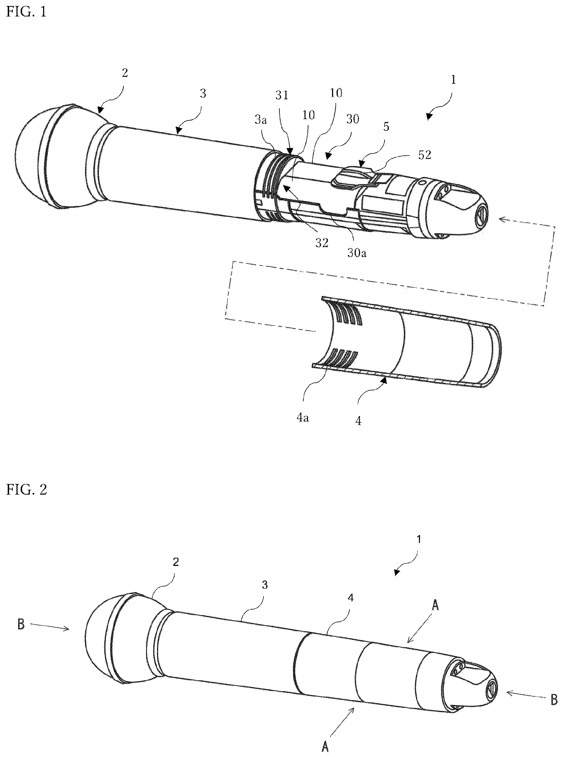

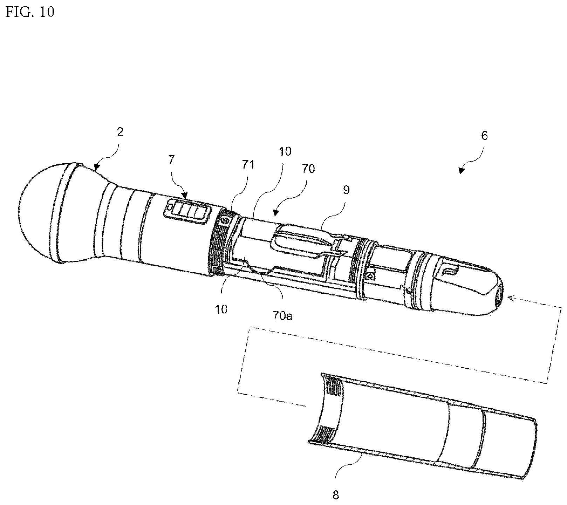

Also, in the following description, with respect to the length direction of handheld microphones 1 and 6 (see Figs. 1 and 10), the side on which a sound collection unit 2 is disposed will be referred to as the front end side in some cases, and the side opposite to the side on which the sound collection unit 2 is disposed will be referred to as the rear end side in some cases.

### [First Embodiment]

As shown in Figs. 1 and 2, a handheld microphone 1 and a housing structure for batteries 10 according to a first embodiment include a sound collection unit 2, a base unit 3, a grip 4, and a battery cover 5, and a battery housing chamber 30 that houses the batteries 10 is provided in the base unit 3.

### - Sound collection unit 2

The sound collection unit 2 is attached to one end side of the base unit 3 in the length direction.

The sound collection unit 2 is a portion including a microphone unit as an electroacoustic transducer, and, for practical use, the microphone unit is covered with a head case such as a punching metal or a windshield. The electroacoustic transducing system of the microphone unit is of any type, and may be of a capacitor type or a dynamic type, for example. Note that the handheld microphone 1 may be of a wireless type or a wired type.

### - Base unit 3

The base unit 3 is a cylindrical member, and includes an electrical circuit that processes a sound signal electroacoustically transduced at the microphone unit. A switch or the like for operation is attached to an outer peripheral surface of the base unit 3 as appropriate.

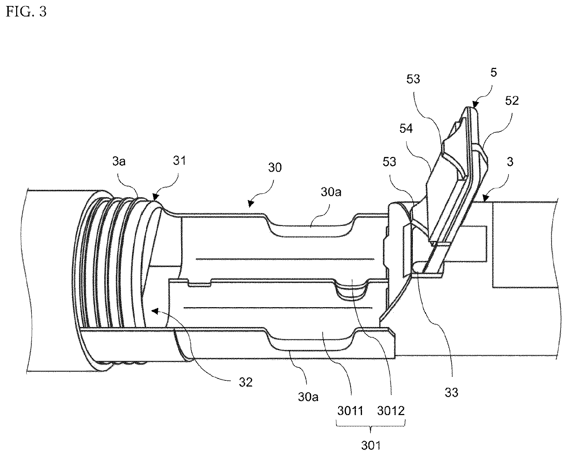

As shown in Fig. 3, the base unit 3 includes a small diameter portion 31 in the vicinity of the end portion on the front end side of the end portions of the battery housing chamber 30 in the length direction. The small diameter portion 31 is a diameter slightly smaller than the largest diameter of the base unit 3. Also, the small diameter portion 31 has, on its outer peripheral surface, a male screw 3a corresponding to a female screw 4a of the grip 4 described later. The number of turns of the male screw 3a is not limited to any particular number, but it is desirable that a plurality of turns is formed.

The base unit 3 includes the battery housing chamber 30 from substantially the center to the rear end side in its length direction. Cylindrical batteries 10 can be housed in battery housing chamber 30, with their central axis lines being parallel to the length direction of the base unit 3.

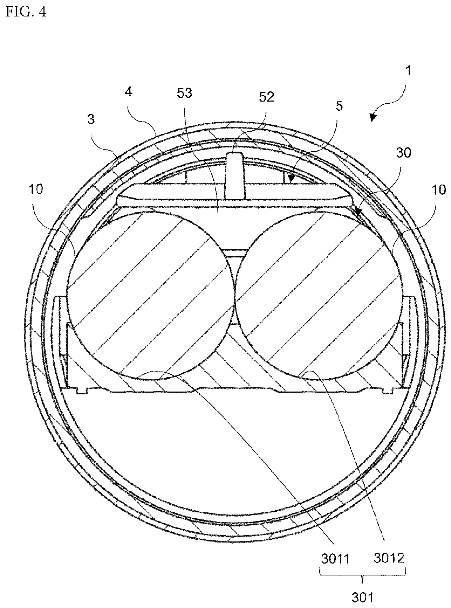

As shown in Fig. 1, in the present embodiment, two size AA batteries can be housed in the battery housing chamber 30 side by side in the width direction. **In** another embodiment, however, the width and the length of the battery housing chamber 30, and the shape of a placement surface 301 (see Fig. 4) for the batteries 10 are adjusted to appropriate ones, so that batteries of some other standard or size such as size AAA batteries or button batteries, or one or three or more batteries can be housed therein.

As shown in Figs. 3 and 4, the bottom surface of the battery housing chamber 30 forms the placement surface 301 for the batteries 10 to be housed. The placement surface 301 has a shape in which a first placement surface 3011 and a second placement surface 3012 having a substantially partially cylindrical shape corresponding to part of the outer peripheral shape of the batteries 10 to be housed are arranged side by side in the width direction. With this arrangement, the batteries 10 housed side by side in the battery housing chamber 30 are disposed so that the lower half thereof is wrapped.

Also, the battery housing chamber 30 has cutout portions 30a that are cut out in a tongue shape, at both end portions in the width direction. When taking the batteries 10 housed in the battery housing chamber 30, out of the battery housing chamber 30, the user is only required to place a finger on each battery 10 from the cutout portion 30a to pull out the battery 10.

Note that the cutout portions 30a are formed at positions close to the end portion opposite to a recessed portion 32 described later, of the end portions in the length direction of battery housing chamber 30. One end side of each battery 10 housed in the battery housing chamber 30 is made to enter the recessed portion 32, and therefore, the battery 10 would be taken out smoothly if the side opposite to the side made to enter the recessed portion 32 is lifted up. In this regard, as a result of the cutout portions 30a being formed at positions close to the end opposite to the recessed portion 32, even if one end side of each battery 10 enters the recessed portion 32, the other end side of the battery 10 can be lifted up with a finger placed on the battery 10 from the cutout portion 30a, and the battery 10 can be removed smoothly.

While the grip 4 is not attached to the base unit 3, the battery housing chamber 30 is left open so that batteries 10 can be replaced. When the grip 4 is attached, the battery housing chamber 30 is covered with the grip 4.

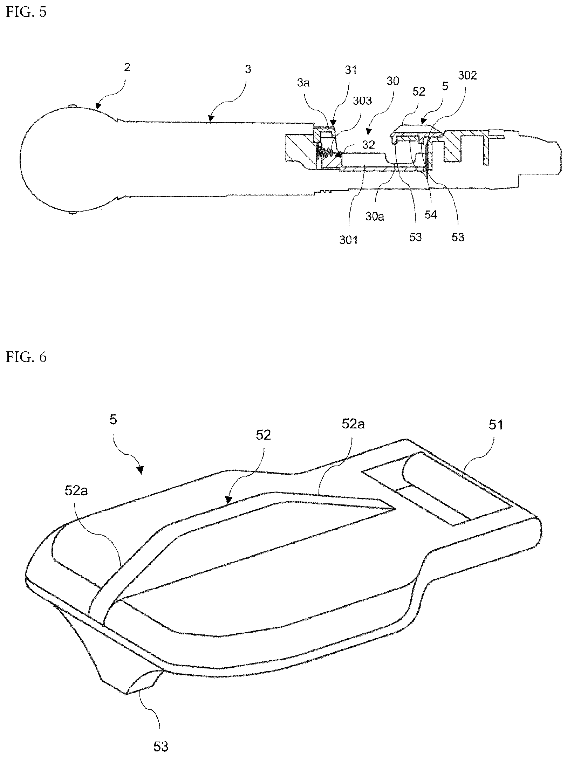

As shown in Fig. 5, positive terminals 302 and negative terminals 303 that are in contact with the positive and negative electrodes of the batteries 10 are provided at the front end and the rear end of the battery housing chamber 30, respectively. The positive terminals 302 and the negative terminals 303 are electrically connected to the electrical circuit in the base unit 3. Also, the negative terminals 303 are formed with coil-spring elastic contact points that are pushed into contact with the negative electrodes of the batteries 10 by spring force. With this arrangement, rattling of the batteries 10 housed in the battery housing chamber 30 can be prevented. Note that both the positive terminals 302 and the negative terminals 303 may be elastic contact points.

Note that, as for the positions at which the positive terminals 302 and the negative terminals 303 are disposed, the positive terminals 302 may be disposed on the rear end side while the negative terminals 303 are disposed on the front end side as shown in the drawing, or, as opposed to the example shown in the drawing, the positive terminals 302 may be disposed on the front end side while the negative terminals 303 are disposed on the rear end side. Also, the positions at which the positive terminals 302 and the negative terminals 303 are disposed may be different between the first placement surface 3011 and the second placement surface 3012.

The base unit 3 also includes, on the front end side of battery housing chamber 30 in the length direction, the recessed portion 32 that allows end portions of the housed batteries 10 to enter the inside of the base unit 3. The recessed portion 32 is formed on the inner side of the small diameter portion 31, and the negative terminals 303 are disposed deep in the recessed portion 32.

**In** a case where the batteries 10 are housed in the battery housing chamber 30, one end portion of each battery 10 is first made to enter the recessed portion 32, and the other end portion is then placed on the placement surface 301 of the battery housing chamber 30. With this arrangement, the base unit 3 presses one end side of each battery 10 that has entered the recessed portion 32 with the inner peripheral surface of the small diameter portion 31, and restricts movement of the batteries 10 so as not to be removed. **In** the handheld microphone 1, one end side of each battery 10 is fixed by the recessed portion 32. Thus, the number of components can be made smaller than that in a case where one end side of each battery 10 is pressed with a complicated lock structure, or where fixing parts are adopted separately from the other parts. As a result, the handheld microphone 1 can be made smaller in size, the cost of production can be reduced, and failures are less likely to occur. Such a configuration is more valuable for the handheld microphone 1 in which an impact is likely to be applied to the grip 4 particularly because the handheld microphone 1 is used while being gripped with a hand, and it is not preferable to increase the outer diameter more than necessary. Also, the process to be performed when the user replaces the batteries 10 is simple, and is easy to handle. Further, as one end side of each battery 10 is pressed by the recessed portion 32, removal of the batteries 10 can be restricted even if the length of the battery cover 5 that presses the other end side of each battery 10 is shortened.

### - Grip 4

As shown in Figs. 1 and 2, the grip 4 is an example of a cylindrical unit that is attached to the base unit 3 and covers the battery housing chamber 30 in an openable and closable state. **In** the present embodiment, the grip 4 also has a function as a gripping portion that can be gripped by hand together with the base unit 3, while covering the battery housing chamber 30.

The grip 4 is a cylindrical member whose both ends in the length direction are open. The outer diameter of the grip 4 on the front end side is the same as the outer diameter of the base unit 3 on which the front end of the grip 4 abuts when the grip 4 is attached to the base unit 3. With this arrangement, in a state where the grip 4 is attached to the base unit 3, and the battery housing chamber 30 is closed by the grip 4, the outer peripheral surfaces of the base unit 3 and the grip 4 constitute a smooth continuous surface without a step.

The grip 4 includes the female screw 4a on the inner peripheral surface of the front end portion. The female screw 4a has the same effective diameter and pitch as those of the male screw 3a of the base unit 3, and is screwed together with the male screw 3a. Note that the number of turns of the female screw 4a and the male screw 3a may be set as appropriate, depending on dimensions such as the diameters and lengths of the base unit 3 and the grip 4.

**In** a case where the grip 4 that has been removed from the base unit 3 is attached to the base unit 3, the grip 4 is slid from the rear end side to the front end side of the base unit 3 so that the base unit 3 is inserted into the cylindrical hole of the grip 4. When the grip 4 is further rotated in the tightening direction in a state where the grip 4 covers the battery housing chamber 30, the male screw 3a of the base unit 3 is screwed into the female screw 4a of the grip 4, and thus, the grip 4 is attached to the base unit 3.

**In** a case where the battery housing chamber 30 is opened to replace the batteries 10 in a state where the grip 4 is attached to the base unit 3, the grip 4 is rotated in a direction opposite to the tightening direction to cancel the screw contact between the male screw 3a and the female screw 4a. The grip 4 is then slid toward the rear end side along the base unit 3. As the grip 4 is removed from the base unit 3 in this manner, the battery housing chamber 30 is opened, and replacement or the like of the batteries 10 can be performed.

Note that, in the present embodiment, the male screw 3a is disposed on the side of the base unit 3, and the female screw 4a is disposed on the side of the grip 4. However, the relationship between the male screw 3a and the female screw 4a is only required to be a convex-concave engagement relationship in which the two screws can be engaged with each other, and the female screw may be provided on the side of the base unit 3 while the male screw is disposed on the side of the grip 4.

### - Battery cover 5

As shown in Fig. 1, the battery cover 5 is an example of a contact piece that comes into contact with the batteries 10 housed in the battery housing chamber 30.

The battery cover 5 is disposed on the rear end side (second end side) of the battery housing chamber 30 in the length direction, which is the side opposite to the front end side (first end side) on which the recessed portion 32 is provided.

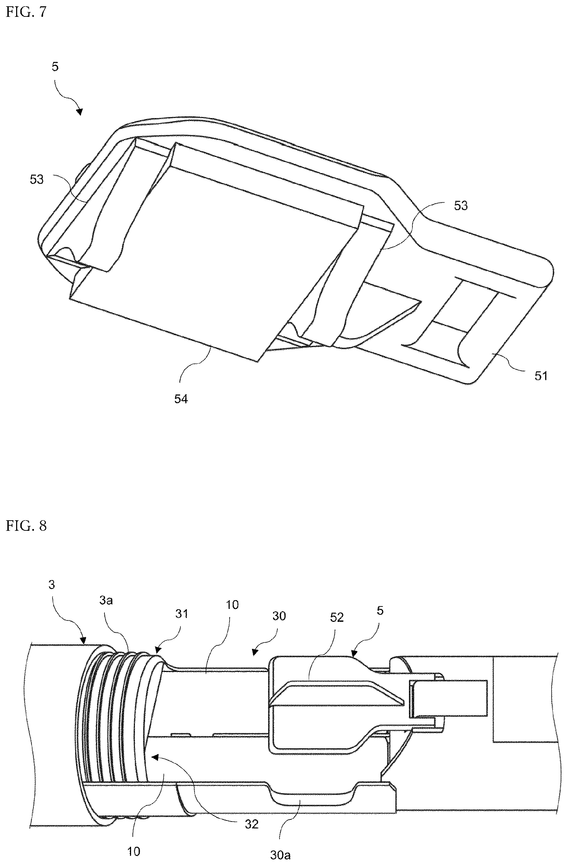

As shown in Figs. 6 and 7, the battery cover 5 also includes a rod-like hinge pin 51 having a length in the width direction. As shown in Fig. 3, the base unit 3 includes a hinge arm 33 that pivotally supports the hinge pin 51 (see Fig. 6), and the battery cover 5 is rotatably attached to the base unit 3 by a hinge structure.

With this arrangement, the battery cover 5 turns toward the batteries 10 housed in the battery housing chamber 30 to come into contact with the batteries 10 so as to partially cover the batteries 10, or turns away from the batteries 10 to open the battery housing chamber 30 so that the batteries 10 can be removed.

As shown in Fig. 6, the battery cover 5 has a plate shape, and has a protruding portion 52 (first protruding portion) on a second surface opposite to a first surface that presses the batteries 10. The protruding portion 52 abuts on the inner peripheral surface of the grip 4 in a state where the battery housing chamber 30 is closed by the grip 4.

The protruding portion 52 has a length in the length direction of the base unit 3 in a state where the battery housing chamber 30 is closed by the grip 4, and tapers 52a are provided at both ends in the length direction. The tapers 52a at both ends gradually decrease the height of the protruding portion 52 in the directions toward the respective end portions. Further, the end portion of the protruding portion 52 on the front end side is formed in an R-like shape. With this arrangement, when the grip 4 is attached to the base unit 3 or when the grip 4 is removed from the base unit 3, the grip 4 is less likely to be caught by the protruding portion 52 or the battery cover 5 even if the grip 4 is slid along the outer periphery of the base unit 3. As a result, the grip 4 can be smoothly attached to and detached from the base unit 3.

As shown in Fig. 7, in the battery cover 5, protruding portions 53 (second protruding portions) conforming to the outer peripheral shape of the batteries 10 are provided on the first surface that comes into contact with the batteries 10. The pair of protruding portions 53 are provided at a distance from each other in the direction of the central axis line of the housed batteries 10. The protruding portions 53 each have a substantially triangular cross-sectional shape in which the central portion in the width direction protrudes toward the batteries 10, and the oblique sides on both end sides in the width direction have an arclike shape conforming to the shape of the batteries 10.

As shown in Fig. 4, in a state where the battery housing chamber 30 is closed by the grip 4, the battery cover 5 is brought into contact with the inner peripheral surface of the grip 4 at the three points of the protruding portion 52 and both end portions in the width direction. Also, the protruding portions 53 of the battery cover 5 abut on the outer peripheral surfaces of the batteries 10.

with this arrangement, the gap between the first surface of the battery cover 5 and the grip 4 is filled, and movement of the battery cover 5 is restricted. As a result, the batteries 10 can be pressed against the placement surface 301 by the battery cover 5 without fail. Both end portions of the battery cover 5 in the width direction are formed in an R-like shape conforming to the shape of the inner peripheral surface of the grip 4, and both of the end portions abut on the inner peripheral surface of the grip 4 in a constant area. Accordingly, the battery cover 5 is more reliably fixed by the grip 4 than that in the case of point contact.

Note that, in the present embodiment, the battery cover 5 is brought into contact with the inner peripheral surface of grip 4 at three points, and thus, the gap between the first surface of the battery cover 5 and the grip 4 is filled. On the other hand, the number and the shape of the contact points between the grip 4 and the battery cover 5 can be determined as appropriate. For example, in a case where the shape of the battery cover 5 on the first surface side conforms to the shape of the inner peripheral surface of the grip 4, the battery cover 5 is also brought into surface contact with the inner peripheral surface of the grip 4, so that the gap between the first surface of the battery cover 5 and the grip 4 is filled.

As shown in Fig. 7, in the battery cover 5, a buffer 54 is provided on the first surface that comes into contact with the batteries 10. The buffer 54 is disposed between the pair of protruding portions 53.

The batteries 10 may have a slightly different outer diameter from each other, because a certain difference with respect to a reference dimension is allowed even if they are manufactured on the basis of the same standard. However, the buffer 54 absorbs the difference in outer diameter between the batteries 10, and the batteries 10 are pressed by the battery cover 5 without fail.

Note that, as the buffer 54, a member having elasticity such as urethane sponge is used, for example. Further, the buffer 54 is attached to the battery cover 5 with an adhesive or the like.

Note that, in some other embodiment, the battery cover 5 having such a configuration may be formed with an elastic material such as rubber. **In** this case, even if a hinge structure is not adopted, the battery cover 5 can be bent and brought into contact with the batteries 10, or be separated from batteries 10, simply with one end portion attached to the rear end portion of battery housing chamber 30. Also, the battery cover 5 may have the functions of the buffer 54. As a result, even in a case where the handheld microphone 1 is unexpectedly dropped, the battery cover 5 is less likely to be damaged. Furthermore, as a result of the fact that the hinge structure or the buffer 54 can be omitted, it is possible to eliminate a failure or the like of this portion, and reduce the number of parts to lower the manufacturing cost.

### - Process of replacing batteries 10

A process of replacing the batteries 10 in the handheld microphone 1 is now described.

As shown in Fig. 1, when the batteries 10 are replaced in a state where the grip 4 is attached to the base unit 3, the user first removes the grip 4 from the base unit 3. As the grip 4 is rotated in a predetermined direction with respect to the base unit 3, the screwed state of the male screw 3a of the base unit 3 and the female screw 4a of the grip 4 is canceled. When the grip 4 is slid in this state, the battery housing chamber 30 is opened as shown in Fig. 8.

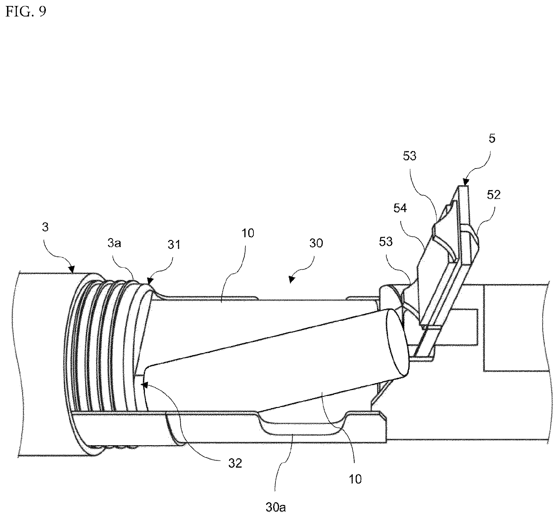

**In** the state where the battery housing chamber 30 is open, the user puts a finger on a battery 10 from the cutout portion 30a and lifts up the rear end side of the battery 10. At this point of time, as shown in Fig. 9, even if the user has not turned the battery cover 5 toward the rear end side to separate the battery cover 5 from the batteries 10 beforehand, the battery cover 5 turns toward the rear end side as the rear end portion of a battery 10 is lifted up. When the user further lifts up the battery 10 by pulling out the front end portion of the battery 10 from the recessed portion 32, the housed battery 10 can be taken out of the battery housing chamber 30.

When a battery 10 for replacement is to be housed after the battery 10 is removed, one end side of the battery 10 for replacement is slit into the recessed portion 32 in the state where the battery cover 5 has been turned to the rear end side as illustrated in Fig. 3. The other end side of the battery 10 for replacement is then placed on the placement surface 301.

Successively, the grip 4 is slid from the rear end side toward the front end side of the base unit 3 so that the base unit 3 is inserted into the cylindrical hole of the grip 4. At this point of time, even if the user has not turned the battery cover 5 to the front end side to put the battery cover 5 into contact with the batteries 10 beforehand, the user is only required to slide the grip 4 along the base unit 3, to turn the battery cover 5 toward the front end side so as to be pushed down by the grip 4 that has been slid from the rear end side toward the front end side, and to bring the battery cover 5 into contact with the batteries 10. When the grip 4 is further rotated in the tightening direction in the state where the grip 4 covers the battery housing chamber 30, the male screw 3a of the base unit 3 is screwed into the female screw 4a of the grip 4, and thus, the grip 4 is attached to the base unit 3.

Note that, in a case where the batteries 10 are about to be housed in the battery housing chamber 30 in the initial state or the like in which any battery 10 is not housed, the grip 4 is only required to be attached after the battery housing chamber 30 is opened and the batteries 10 are housed in the same manner as in the case of replacing the batteries 10.

**In** the handheld microphone 1 according to the present embodiment described above, the batteries 10 housed in the battery housing chamber 30 can be reliably pressed and be restricted from removal, and the operability at a time of replacement of the batteries 10 is also high. Furthermore, since the structure for pressing the batteries 10 with the battery cover 5 is simple, the size can be reduced, the cost of production can be lowered, and failures are less likely to occur.

### [Second Embodiment]

Fig. 10 illustrates a handheld microphone 6 and a battery housing structure according to a second embodiment.

The handheld microphone 6 includes a sound collection unit 2, a base unit 7, a grip 8, and a battery cover 9, and a battery housing chamber 70 that houses batteries 10 is provided in the base unit 7.

Note that the sound collection unit 2 has the same configuration as that of the handheld microphone 1 described above, and therefore, is denoted by the same reference sign. Further, in the following description, components different from those of the handheld microphone 1 will be mainly described, and the remaining components are the same as those of the handheld microphone 1.

The handheld microphone 6 according to the present embodiment differs from the handheld microphone 1 mainly in not having any component corresponding to the recessed portion 32 of the handheld microphone 1 described above, and in that the battery cover 9 is longer than the battery cover 5 of the handheld microphone 1 in the length direction of the batteries 10.

As a result of the fact that the base unit 7 does not have a component corresponding to the recessed portion 32, a small diameter portion 71 of the base unit 7 is closer to the sound collection unit 2 than that of the base unit 3. Accordingly, the grip 8 that is attached to and is detached from the base unit 7 is longer than the grip 4.

Further, since the base unit 7 does not have a component corresponding to the recessed portion 32, the end portion of each battery 10 on the front end side among the end portions in the length direction is not pressed against the battery housing chamber 70. Therefore, in the handheld microphone 6, the length of the battery cover 9 in the length direction is greater than that of the battery cover 5 described above. **In** the example shown in the drawing, the battery cover 9 has a length at least equal to or greater than half the length of the batteries 10 housed in the battery housing chamber 70. Accordingly, the battery cover 9 covers at least the portion extending from the end portion on the rear end side to the central portion of each battery 10 in the length direction. As a result, the front end side of each battery 10 that is not covered by the battery cover 9 can be prevented from unexpectedly coming out of the battery housing chamber 70.

Note that, in the handheld microphone 6, cutout portions 70a are formed at positions close to the front end side of the end portions of the battery housing chamber 70 in the length direction. Since the base unit 7 does not have a component corresponding to the recessed portion 32, when a battery 10 is to be taken out, the battery 10 can be removed more smoothly without being obstructed by the battery cover 9 if the battery 10 is lifted up from the front end side on which the battery cover 9 is not provided.

**In** the handheld microphone 6 according to the present embodiment, the battery cover 9 can also restrict movement of the batteries 10 coming out of the battery housing chamber 70. Further, the handheld microphone 6 can be made smaller in size like the handheld microphone 1, the cost of production can also be reduced, and failures are also less likely to occur. Also, the process to be performed when the user replaces the batteries 10 is simple, and is easy to handle.

### Industrial Applicability

The present invention relates to a microphone, and is characterized particularly by its battery housing structure. This battery housing structure can be applied to devices and apparatuses other than the above-described handheld microphones, as long as they use a battery as a drive source. However, as described above, the present invention is effective particularly in a handheld microphone in which smooth battery replacement, reliable maintenance of a battery housing state, and the like are required.

### Reference Signs List

- 1: handheld microphone
- 10: battery
- 2: sound collection unit
- 3: base unit
- 30: battery housing chamber
- 301: placement surface
- 31: small diameter portion
- 32: recessed portion
- 4: grip (cylindrical unit)
- 5: battery cover (contact piece)
- 52: protruding portion (first protruding portion)
- 52a: taper
- 53: protruding portion (second protruding portion)
- 54: buffer
- 6: handheld microphone
- 7: base unit
- 70: battery housing chamber
- 71: small diameter portion
- 8: grip (cylindrical unit)
- 9: battery cover (contact piece)

## Claims

1. A microphone comprising:
a base unit that has a sound collection unit attached to one end side, and has a battery housing chamber;
a cylindrical unit that is attached to the base unit, and covers the battery housing chamber in an openable and closable manner; and
a contact piece that has a first surface to come into contact with a battery housed in the battery housing chamber, wherein
the contact piece has a first protruding portion provided on a second surface opposite to the first surface, the contact piece being in contact with an inner peripheral surface of the cylindrical unit in a state where the battery housing chamber is closed by the cylindrical unit.

2. The microphone according to claim 1, wherein
the first protruding portion of the contact piece has a length in a length direction of the base unit, and has tapers formed at both ends in the length direction.

3. The microphone according to claim 1, wherein
the contact piece has a second protruding portion provided on the first surface, the second protruding portion conforming to an outer peripheral shape of the battery.

4. The microphone according to claim 1, wherein
end portions of the contact piece in a width direction have a shape conforming to a shape of an inner peripheral surface of the cylindrical unit, and,
in the state where the battery housing chamber is closed by the cylindrical unit, the first protruding portion and the end portions of the contact piece are in contact with the inner peripheral surface of the cylindrical unit.

5. The microphone according to claim 1, wherein
the contact piece has a buffer provided on the first surface that comes into contact with the battery.

6. The microphone according to claim 1, wherein
the base unit has a recessed portion provided on a first end side of the battery housing chamber in a length direction, the recessed portion allowing an end portion of the housed battery to slip into the base unit, and
the contact piece is disposed on a second end side of the battery housing chamber in the length direction.

7. The microphone according to claim 1, wherein
the contact piece is formed with an elastic material.

8. A battery housing structure comprising:
a base unit that has a battery housing chamber;
a cylindrical unit that is attached to the base unit, and covers the battery housing chamber in an openable and closable manner; and
a contact piece that has a first surface to come into contact with a battery housed in the battery housing chamber, wherein
the contact piece has a first protruding portion provided on a second surface opposite to the first surface, and,
in a state where the battery housing chamber is closed by the cylindrical unit, the first protruding portion is in contact with an inner peripheral surface of the cylindrical unit.
